# EUROPÄISCHE PATENTANMELDUNG

(11) **EP 2 113 865 A1**
(43) Veröffentlichungstag der Anmeldung: **04.11.2009**
(21) Anmeldenummer: 08103783.0
(22) Anmeldetag: 30.04.2008
(51) Int. Cl.: G06K 9/00

(54) **Verfahren zum Prüfen von Porträtfotos**

(71) Anmelder: Siemens AG Österreich, 1210 Wien (AT)
(72) Erfinder: Birchbauer, Josef Alois, 8054 Seiersberg (AT); Bischof, Horst, 8063 Eggersdorf (AT); Hennecke, Marcus, 8045 Graz (AT); Uray, Martina, 8010 Graz (AT)
(74) Vertreter: Maier, Daniel Oliver

(57) **Zusammenfassung**

Verfahren zum Prüfen von Porträtfotos auf bestimmte Eigenschaften mittels eines modellbasierten Verfahrens, besonders zur Prüfung auf Tauglichkeit des Porträtfotos als Passbild.

## Beschreibung

### Technisches Gebiet

Die Erfindung betrifft ein Verfahren zum Prüfen von Porträtfotos.

### Stand der Technik

Verschiedene Staaten stellen an Porträtfotos, welche für Ausweise, besonders für Pässe verwendet werden sollen, besondere Ansprüche. Neben Minimal- und Maximalabmessungen werden vielfach Forderungen nach beispielsweise "frontaler Pose", "geöffneten Augen", "geschlossenem Mund" "unverdecktem Gesicht" und ähnlichem gestellt. Weitere Forderungen wie z.B. nach bestimmter Beleuchtung, Schärfe oder Anforderungen an digitale Fotos wie z.B. bestimmte Auflösungen werden ebenfalls erhoben.

Im häufig angewandten Standard ISO/IEC19794-5 ist eine Vielzahl von Kriterien definiert, allerdings ist darin keine verbindliche zugehörige Meß- bzw. Prüfmethode beschrieben, sodass die Prüfung unter anderen mittels Masken und Schablonen vorgenommen wird, welche über die zu prüfenden Fotos gelegt werden und eine manuelle Begutachtung erfordern. Eine wiederholbare Genauigkeit ist durch dieses manuelle Verfahren nicht gewährleistet.

Durch die fast vollständige Verdrängung der herkömmlichen analogen Fotographie mit chemisch zu entwickelnden Filmen durch digitale Fotographie liegen Bilder zumeist in digitaler Form vor, sodass diese Bilder direkt mittels eines Computergestützten Verfahrens untersucht werden können. Einzelne Kriterien (z.B. Belichtung, Graustufendichte) eignen sich besonders gut für die Untersuchung mittels eines computergestützten Verfahrens.

Zur Untersuchung von Porträtfotos eingesetzte Verfahren basieren beispielsweise auf der Methode von sogenannten trainierten Klassifikatoren, welche jeweils auf eine bestimmte zu untersuchende Eigenschaft hin optimiert und mittels Beispielfotos trainiert werden. Eine Lösung, welche alle geforderten Eigenschaften von Porträtfotos gleichzeitig und schnell überprüft, sowie einfach und flexibel auf Änderungen der Anforderungen anpaßbar ist, ist noch nicht vorhanden.

### Darstellung der Erfindung

Der Erfindung liegt daher die Aufgabe zugrunde, ein Verfahren zum Prüfen von Porträtfotos anzugeben, welches ohne manuelle Vorgänge, wie dem Anlegen von Prüfschablonen, eine Prüfung auf der Basis von digitalen Fotos vornimmt.

Die Aufgabe wird durch ein Verfahren mit den Merkmalen des Anspruchs 1 gelöst. Vorteilhafte Ausgestaltungen sind Gegenstand von abhängigen Ansprüchen.

Dem Grundgedanken der Erfindung nach wird ein in digitaler Form vorliegendes Porträtfoto mittels eines modellbasierten Verfahrens auf bestimmte Eigenschaften (beispielsweise Erfüllung von Standards) hin untersucht und im Fall, dass das untersuchte Porträtfoto in allen untersuchten Eigenschaften die Toleranzbereiche erfüllt, dieses Porträtfoto als konform gekennzeichnet wird. Das erfindungsgemäße Verfahren zielt auf die Untersuchung von Portraitfotos auf bestimmte Eigenschaften, welche durch die Analyse der Gesichtsgeometrie ermittelbar sind, ab. Ebenso eignet sich das erfindungsgemäße Verfahren zur Erkennung bestimmter Gesichtsteile für eine weitere Analyse des erkannten Gesichtsteils mit einem anderen Verfahren. Beispielsweise kann ein anderes Verfahren mit der vom gegenständlichen Verfahren erkannten Lage der Augen die Bestimmung der Augenfarbe vornehmen um beispielsweise eine sogenannte "rote Augen Erkennung" durchzuführen und solche, durch direkten Blick in ein Blitzgerät entstandene Effekte, die die Verwendung des Fotos als Passfoto ausschließen, zu erkennen.

Der wesentlichste Vorteil des erfindungsgemäßen Verfahrens ist es, das die Untersuchung auf bestimmte Eigenschaften ohne manuelle Tätigkeiten, wie dem Anliegen von Masken oder Schablonen, objektiv, mit wiederholbarer Genauigkeit und schneller durchgeführt werden kann.

Ein weiterer wesentlicher Vorteil ist die rasche Anpaßbarkeit des erfindungsgemäßen Verfahrens an Änderungen in den zu prüfenden Kriterien, da insbesondere keine neuen Masken und Schablonen angefertigt werden müssen.

Auch gegenüber den bisher im Einsatz befindlichen computergestützten Verfahren ist das erfindungsgemäße Verfahren vorteilhaft, da einfache Parameteränderungen zur Änderung von Kriterien genügen und keine Beispielfotos angefertigt werden müssen, wie es beispielsweise beim sogenannten trainierten Klassifikatorenverfahren zu trainieren dieser Klassifikatoren erforderlich ist, wohingegen das erfindungsgemäße Verfahren diese Beispielfotos nur während der sogenannten Lernphase einmalig benötigt.

Hat das Erfindungsgemäße Verfahren diese Lernphase abgeschlossen, so werden Änderungen an den zu untersuchenden Eigenschaften mittels einer Parameteränderung vorgenommen. Beispielsweise kann der Toleranzbereich einer "geöffneter Mund Erkennung" auf diese Art verändert werden, ohne eine neuerliche Klassifizierung anhand vieler Beispielfotos vornehmen und damit diese Lernphase wiederholen zu müssen.

Erfindungsgemäß wird das zur Prüfung in digitaler Form vorliegende Foto mittels eines modellbasierten Verfahrens auf bestimmte Eigenschaften hin untersucht, welche durch Analyse der Gesichtsform, bzw. der Lage der erkannten Gesichtsform im gesamten Porträtfoto ermittelt werden können, d.h. auf geometrische Kriterien abbildbar sind.

Modellbasierte Verfahren passen eine Grundform, in dieser Anwendung eine abstrahierte Gesichtsform an das vorliegende Foto in mehreren Iterationszyklen an, wobei diese Verfahren auf dem Prinzip des Auffindens bestimmter (ausgezeichneter) Punkte (sogenannten Landmarks) in Abbildungen von dem Verfahren unbekannten Gesichtern beruhen. Nach dem Erkennen diesen bestimmten Punkte (die beispielsweise die Augenbrauenkontur beschreiben) können alle Punkte untereinander in geometrische Beziehungen (besonders Abstand, Winkellage) gesetzt werden und aus diesen geometrischen Größen die zu analysierenden Eigenschaften (z.B. Symmetrie im Gesamtbild, Erkennung geschlossener Augen, Erkennung der Verdeckung des Gesichts) gewonnen werden.

Diese, eine Grundform an das konkrete Bild anpassende Verfahren sind unter anderem als sogenannte Active Shape Modelle bekannt und werden besonders in der Medizintechnik zur Erkennung bestimmter Objekte in z.B. Röntgenaufnahmen eingesetzt.

Diese abstrahierte Gesichtsform ist aus einer Menge miteinander verbundenen Punkten zusammengesetzt, welche die wesentlichen Linien eines Gesichts (Kinnumriß, Nasenumriß, Mundaußen- und Innenkontur, Augenbrauen und weitere) bilden. In mehreren Iterationszyklen wird diese abstrahierte Gesichtsform verzerrt und zu einzelnen, im zu untersuchenden Bild erkannten Kanten verschoben, sodass nach einigen Iterationszyklen die abstrahierte Gesichtsform mit den im zu untersuchenden Bild erkannten Kanten in Deckung gerät. Nach Abschluß dieser Iterationszyklen liegt die (verzerrte) abstrahierte Gesichtsform auf den entsprechenden Kanten des zu untersuchenden Bilds und es können die geforderten geometrischen Untersuchungen mittels dieser an die konkrete Gesichtsform angepassten abstrahierten Gesichtsform vorgenommen werden.

Beispielsweise sind die Kriterien "geöffnete Augen", "geschlossener Mund", "frontale Ansicht" oder "Augen in Richtung der Kamera gerichtet" direkt aus der an die konkrete Gesichtsform angepassten abstrahierten Gesichtsform bestimmbar.

Werden bestimmte Geschichtsteile erkannt, kann auf Basis dieser Erkennung eine weitergehende Untersuchung veranlasst werden. Beispielsweise kann als Folge der Erkennung der Lage der Augen eine Schärfe(Fokus)bestimmung auf diese Augenregion vorgenommen werden.

Weiters kann beispielsweise die Symmetrie, bzw. die Form des Kinnumrisses zur Bestimmung des Kriteriums "frontale Ansicht" herangezogen werden.

Eine vorteilhafte Ausführungsform der Erfindung setzt als modellbasiertes Verfahren das sogenannte Active Appearance Model ein. Dieses Active Appearance Model, z.B. beschrieben in T.F. Cootes, G.J. Edwards, C.J. Taylor: "Active Appearance Models", in: H. Burkhardt, B. Neumann (Hrsg.), Proceedings of the European Conference on Computer Vision, Vol. 2, S. 484-498, Springer 1998, berücksichtigt zur Erkennung von Geschichtsteilen neben den Umrissen eines Objekts auch die durchschnittliche Grauwertverteilung innerhalb der Objektgrenzen. Durch den Einsatz des Active Appearance Models kann die Robustheit der Lokalisierung von Gesichtsteilen gegenüber dem Active Shape Verfahren gesteigert werden, ebenso wie die Erkennbarkeit von Verdeckungen von Gesichtsteilen.

Eine weitere vorteilhafte Ausführungsform der Erfindung setzt als modellbasiertes Verfahren das sogenannte Morphable 3D Model ein. Dieses Verfahren, beispielsweise beschrieben in "Automatische Rekonstruktion der dreidimensionalen Form von Gesichtern aus einem Einzelbild" V. Blanz, Dissertation, Universität Tübingen, 2000; oder "Reflectance from Images: A Model-Based Approach for Human Faces", Fuchs, M., Blanz, V., Lensch, H., and Seidel, H-P. Max-Planck Institut Informatik MPI-I-2005-4-001 Research Report 2005; wurde zur Erstellung von dreidimensionalen Modellen von Gesichtern (Köpfen) aus zweidimensionalen Abbildungen des Gesichts entwickelt und liefert die zur Erkennung von bestimmen Eigenschaften des Porträtfotos erforderlichen geometrischen Informationen.

Die Wahl des im erfindungsgemäßen Verfahren eingesetzten modellbasierenden Verfahrens beeinflusst die Geschwindigkeit und Genauigkeit der Bestimmung der geometrischen Eigenschaften des am zu untersuchenden Portraitfoto abgebildeten Gesichts und der Bestimmung der Lage des Gesichts am zu untersuchenden Portraitfoto. Das erfindungsgemäße Verfahren ist nicht auf den Einsatz eines der drei beispielhaft erwähnten modellbasierenden Verfahren eingeschränkt.

Das erfindungsgemäße Verfahren ist besonders zum Prüfen von Porträtfotos auf Tauglichkeit des Porträtfotos als Passbild geeignet.

### Kurzbeschreibung der Zeichnungen

Es zeigen beispielhaft:
**Fig. 1** die Darstellung der Lage ausgezeichneter Erkennungspunkte in einem Gesicht mit neutralem Ausdruck.
**Fig. 2** die Darstellung der Lage ausgezeichneter Erkennungspunkte in einem Gesicht mit weit geöffnetem Mund.
**Fig. 3** die Darstellung der Lage ausgezeichneter Erkennungspunkte in einem Gesicht mit einem geschlossenen Auge.

### Ausführung der Erfindung

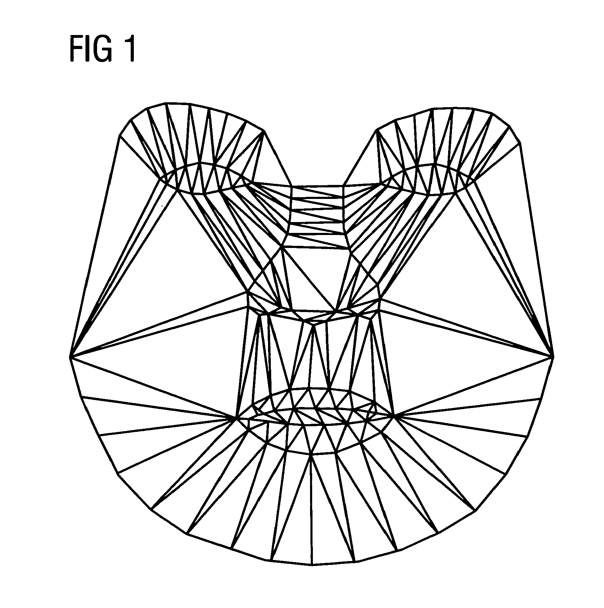

**Fig.1** zeigt beispielhaft und schematisch die Darstellung der Lage ausgezeichneter Erkennungspunkte in einem Gesicht mit neutralem Ausdruck wobei ein modellbasiertes Verfahren der Bildverarbeitung (z.B. das Active Shape Verfahren) diese ausgezeichneten Erkennungspunkte mittels verzerren einer abstrahierten Gesichtsgrundform in mehreren Iterationszyklen aufgefunden hat. Die in Fig. 1 dargestellten Linien verbinden die ausgezeichneten Erkennungspunkte, die Linien stellen kein Element des modellbasierten Verfahrens dar sondern dienen der besseren Erkennbarkeit der Prinzipien des Verfahrens.

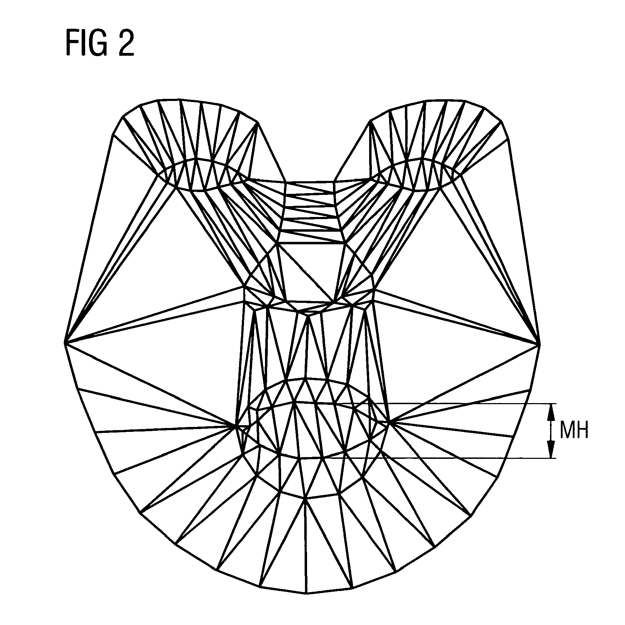

**Fig.2** zeigt beispielhaft und schematisch der Lage ausgezeichneter Erkennungspunkte in einem Gesicht mit weit geöffnetem Mund. Aus der Lage der ausgezeichneten Erkennungspunkte werden geometrische Beziehungen abgeleitet, Fig.2 stellt beispielhaft den Fall eines deutlich geöffneten Mundes dar. Mittels des erfindungsgemäßen Verfahrens wird die Mundhöhe MH bestimmt und zur Bewertung, ob das Foto die vorgegebenen Kriterien erfüllt herangezogen. Die Mundhöhe kann beispielsweise als Relativwert (z.B. zu einer Mundbreite oder Gesichtshöhe) oder als Absolutwert (in Elementen (Pixel) des Bildes oder, falls bestimmbar in Längeneinheiten) bestimmt werden.

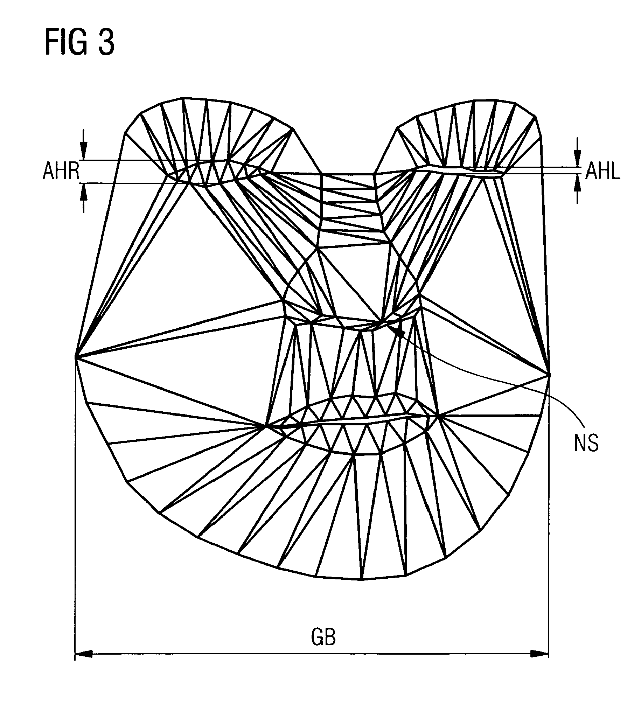

**Fig.3** zeigt beispielhaft und schematisch der Lage ausgezeichneter Erkennungspunkte in einem Gesicht mit einem geschlossenen Auge. Die aus der Lage der Erkennungspunkte bestimmten geometrischen Größen Augenhöhe links AHL und Augenhöhe rechts AHR dienen als Erkennungsmerkmale ob die auf dem Foto abgebildete Person eines oder beide Augen geschlossen hält. Im in Fig.3 dargestellten Beispiel ist das linke Auge wesentlich enger geschlossen als das rechte Auge. Weiters ist in Fig.3 das Gesicht leicht schräg dargestellt, dieser Umstand kann etwa an der leicht außermittigen Position der Nasenspitze NS im Verhältnis zur Gesichtsbreite GB erkannt werden.

### Liste der Bezeichnungen

- AHL: Augenhöhe links
- AHR: Augenhöhe rechts
- GB: Gesichtsbreite
- MH: Mundhöhe
- NS: Nasenspitze

## Patentansprüche

1. Verfahren zum Prüfen von Porträtfotos auf bestimmte, aus geometrischen Größen abgeleitete Eigenschaften, welche vorgegebene Toleranzbereiche aufweisen, mit folgenden Verfahrensschritten
- ermitteln dieser geometrischen Größen mittels eines modellbasierten Verfahrens der Bildverarbeitung,
- ermittelt der bestimmten Eigenschaften aus diesen geometrischen Größen,
- ausweisen dieses Porträtfotos als entsprechend im Fall, dass dieses Porträtfotos in allen untersuchten Eigenschaften die vorgegebenen Toleranzbereiche erfüllt.

2. Verfahren zum Prüfen von Porträtfotos gemäß Anspruch 1, **dadurch gekennzeichnet, dass** als modellbasiertes Verfahren der Bildverarbeitung das Active Shape Verfahren verwendet wird.

3. Verfahren zum Prüfen von Porträtfotos gemäß Anspruch 1, **dadurch gekennzeichnet, dass** als modellbasiertes Verfahren der Bildverarbeitung das Active Appearance Verfahren verwendet wird.

4. Verfahren zum Prüfen von Porträtfotos gemäß Anspruch 1, **dadurch gekennzeichnet, dass** als modellbasiertes Verfahren der Bildverarbeitung das Morphable 3D Verfahren verwendet wird.

5. Digitale Kamera zum Anfertigen von Porträtfotos, **dadurch gekennzeichnet, dass** Mittel vorhanden sind um erstellte Porträtfotos mittels eines modellbasierten Verfahrens der Bildverarbeitung auf bestimmte, aus geometrischen Größen abgeleitete Eigenschaften, welche vorgegebene Toleranzbereiche aufweisen, hin zu untersuchen und im Fall, dass das Porträtfoto in allen untersuchten Eigenschaften diese Toleranzbereiche erfüllt, dieses Porträtfoto als entsprechend zu kennzeichnen.
